# EUROPEAN PATENT SPECIFICATION

(11) **EP 1 550 045 B1**
(45) Date of publication and mention of the grant of the patent: **30.09.2009**
(21) Application number: 03773723.6
(22) Date of filing: 30.09.2003
(51) Int. Cl.: G06F 13/368

(54) **DEVICE OPERABLE AS BOTH A HOST AND A NON-HOST (I.E. DUAL-MODE DEVICE)**
EINRICHTUNG ALS HOST UND NON-HOST VERWENDBAR (Z.B. DUAL-MODE EINRICHTUNG)
DISPOSITIF POUVANT FONCTIONNER EN TANT QU'HOTE ET EN TANT QUE NON-HOTE (CF DISPOSITIF BI-MODE)

(30) Priority: 10.10.2002 GB 0223686
(43) Date of publication of application: 06.07.2005
(73) Proprietor: Nokia Corporation, 02150 Espoo (FI)
(72) Inventor: LAIHO, Kimmo, FIN-20810 Turku (FI)
(74) Representative: Derry, Paul Stefan
(86) International application number: PCT/EP2003/050672
(87) International publication number: WO 2004/034266

(56) References cited:
- EP-A- 1 229 747
- CYPRESS SEMICONDUCTOR CORP.: "USB ON-THE-GO PROTOCOL" WWW.USB.ORG, [Online] 26 February 2002 (2002-02-26), XP002283463 Retrieved from the Internet: URL:http://web.archive.org/web/20040603235 613/http://www.usb.org/data/developers/otg /presentations/london/OTG_protocol.pdf> [retrieved on 2004-06-03]
- "On-The-Go supplement to the USB 2.0 specifition, Revision 1,0" UNIVERSAL SERIAL BUS (USB), XX, XX, 18 December 2001 (2001-12-18), pages 1-66,1, XP002952944

## Description

This invention relates to a device operable as a USB host, and to a system including such a device. The invention relates also to a method of operating a device operable as a host, to a system including such, and to a device operable as a USB host.

The USB (universal serial bus) standard is in wide use today, and is commonly used to connect, for example, PCs (personal computers) or laptop computers to peripheral devices such as printers, scanners and the like. The USB 1.1 and 2.0 specifications require that a host device provides a voltage supply on a V_{BUS} line, for use by a non-host device connected thereto. In USB, only one host and one non-host can ever be present on a USB bus, with the non-host being termed a 'device'. However, in the following such devices are termed non-host devices.

A supplement called USB on-the-go (OTG) is proposed, and is discussed at www.usb.org/developers/onthego. In USB OTG, some devices can act as hosts and non-host devices, and are termed dual-mode devices.

In USB OTG, the power supply V_{BUS} need not be provided if the bus is not being used. A dual-mode device that wants to adopt host status can signal on the bus that host status is required using V_{BUS} pulsing, which is effective whether or not V_{BUS} is supplied with a voltage supply. A dual-mode host is not able to provide a voltage supply on V_{BUS}, but by signalling can request a host device not having host status to provide a Voltage supply for use by the dual-mode device. The voltage supply is specified by the USB standard to be between 4.4 Volts and 5.25 Volts. PCs and laptops tend to provide V_{BUS} of at least 4.75 Volts. Mobile telephones and PDAs (personal digital assistants) will be non-host devices, not host or dual-mode devices, although it is anticipated that a subsequent generation of such devices could be dual-mode devices.

US-B-5,784,581 discloses a system for allowing a device, such as a USB device, to have a "roaming" mode in which the device can communicate with other connected devices without requiring an active host controller. Such a device detects the absence of a host controller and enables itself as a master device communicating with other slave devices. Such a device is capable of operating as either a master device or a slave device on a communication link such as a USB by including a first communication port which is utilised when the apparatus is operating as a slave device and a second communication port which is utilised when the apparatus is operating as a master device. The first communication port and the second communication port are coupled by a device controller which enables either the first or second communication port after detecting whether an active host controller is coupled to the first communication port.

According to a first aspect of the invention, there is provided a device as claimed in claim 1.

Such a device can operate as a host device on the bus, yet relinquishing host status when another host is detected allows the device to be used with host devices which are not specially adapted for use in multi-host systems. The device may be one specially designed for operation with devices operating according to the USB on-the-go standard.

The device optionally includes a power supply for providing a supply voltage on a voltage supply line of the bus, the supplied voltage being less than a minimum allowed voltage for the voltage supply line of the bus.

The detecting means can include means, such as a comparator, for detecting a change in voltage, preferably an increase, on the voltage supply line of the bus, thereby detecting the presence of the other host.

Advantageously, the device is arranged for causing at least some lines of the host module to be forced tri-state on detecting the presence of another host.

The fact that the device includes first and second ports, which are connected directly to the bus and thereby also directly to each other allows the connection of a non-host device (or a dual-mode device operating as a non-host device) to one port and the connection of a host device to the other port. When a host is detected, the device can act as a pass-through device but act as a host device otherwise. The device may include a digital video broadcast receiver, such as a DVB-T receiver. This feature provides pass-through capabilities.

In one embodiment, the device is operable as a USB host and has at least one USB port connectable to a USB bus further, the presence detecting means being means for detecting the presence of another USB host. Here, the device preferably includes a power supply for providing a supply voltage on a V_{BUS} line of the USB bus, allowing it to supply power to a USB non-host device connected to the bus. Preferably the supply voltage is less than 4.4 Volts, which is the minimum required by the USB standard, which allows operation with USB non-host devices which do not rely on a USB power supply according to the standard. If the detecting means includes means for detecting a change in voltage on a or the V_{BUS} line of the USB bus, the presence of the other USB host can be detected in a simple manner, for example using a comparator. When another USB host is detected, the device advantageously causes at least some lines of the USB bus to be forced tri-state, i.e. presented with a high impedance. The impedance is likely to be at least one megaohm. This prevents the device interfering to an unacceptable degree with subsequent communications on the bus, with which the device is not an active participant. Sending a USB reset command via the USB bus in response to detecting the presence of another USB host is advantageous since it can cause a non-host device (or a dual-mode device acting as a non-host) on the bus to be reset ready for communication with the newly connected host device. The device preferably includes means for detecting the loss of the other host, and for reassuming host status in response thereto. The loss detecting means advantageously includes means for detecting a reduction in voltage on a or the V_{BUS} line of the USB bus, thereby detecting loss of the other host.

The ports are likely in a practical implementation to be USB ports connected together by a USB bus, also connected to the USB host module. This is a particularly convenient arrangement which can allow connection to a USB non-host device (or a dual-mode device operating as a non-host device), whilst also allowing a USB host device to be connected to the non-host device via the device of the invention. Thus, the device of the invention does not need to be disconnected from the non-host device when it is required to connect a host device to the non-host device. This is seen to have particular application for use with portable non-host devices, particularly those operating according to the USB on-the-go standard.

The fact that the device includes first and second ports, e.g. USB ports, which are connected directly to a bus and thereby also directly to each other, means that the device can have pass-through capabilities. This allows the connection of a non-host device (or a dual-mode device operating as a non-host device) to one port and the connection of a host device to the other port. When a host is detected, the device can act as a pass-through device but act as a host device otherwise. The device may include a digital video broadcast receiver, such as a DVB-T receiver.

The invention also provides a system including any of the above devices, and a host device connected to the port. Here, the system can comprise a non-host device connected to the second port of the device.

According to a second aspect of the invention, there is provided method of operating a device as claimed in claim 15.

In the above, each port may include a male or a female connector. Each port is for allowing connection to an external device.

The invention allows for a new class of device which is operable as a host device but which relinquishes host status, and preferably goes into a standby mode, on detecting the presence of another host. Preferably, the detection involves detecting a change in voltage on a supply line of a bus to which the port is connected. Providing the device with means to provide a voltage on the supply line which is less than the minimum allowed voltage on that line is advantageous since it can allow the detection of another host quite simply. On detecting the presence of another host, lines connected to the port are preferably forced tri-state, or high impedance, so the device does not interfere with the control of the bus by the other host.

Preferably, the device sends a reset command before or at the same time as relinquishing host status. By monitoring the supply voltage line of the bus, the device can detect when the other host is lost, by disconnection or disablement for instance, and take steps to reassume host status. Detection can result from detecting a voltage drop, preferably below a threshold, which is preferably set lower than the minimum allowed voltage. In a preferred embodiment, the threshold is set at less the one half the minimum allowed voltage.

Embodiments of the invention will now be described, by way of example only, with reference to the accompanying drawings, in which:
Figure 1 is a schematic diagram of a system including three devices connected together by a USB bus, according to the invention;
Figure 2 is a circuit diagram of one embodiment of a comparator circuit used in the

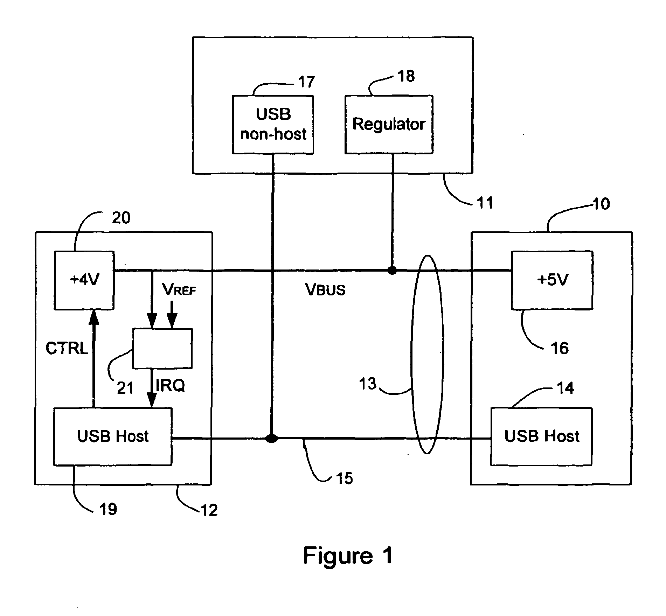

Figure 1 system; and

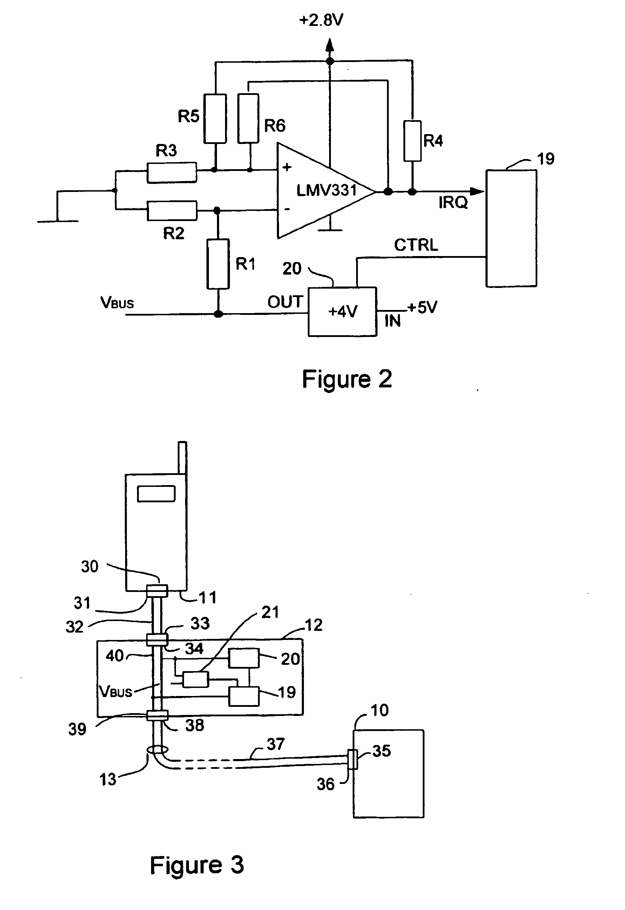

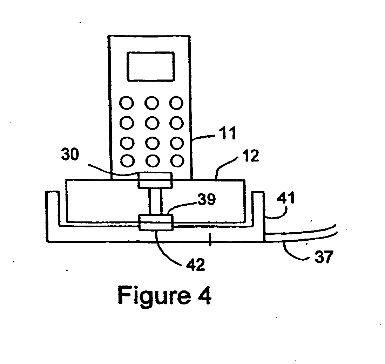

Figures 3 and 4 are schematic diagrams of alternative embodiments of the Figure 1 system.

### Detailed Description Of The Preferred Embodiments

Referring to Figure 1, three devices 10-12 are shown connected to a USB bus 13. A PC 10 includes a USB host module 14, which is connected to D+, D- and ground lines thereafter termed 'the other lines' 15 of the USB bus 13, and a 5 Volt power supply 16, which is connected to a supply voltage line V_{BUS} of the USB bus. The PC 10 is a conventional device, operating according to the USB standard without the OTG supplement. A mobile telephone (or alternatively a PDA) is also connected to the USB bus 13. In particular, a USB non-host module 17 is connected to the other lines 15, so that the mobile telephone 11 can communicate with another device connected to the USB bus 13. The mobile telephone 11 also includes a regulator 18, which is connected to V_{BUS}. The regulator 18 is arranged to convert the voltage supply provided on V_{BUS} to a 3.3 Volt supply, which is suitable for use by the mobile telephone 11. Any convenient form may be used for the regulator 18.

An accessory device 12 is also connected to the USB bus 13. The accessory device 12 is not a non-host device nor a dual-mode device; rather it is a host device which does not operate strictly according to the USB or the USB OTG standards. The accessory device 12 is intended for connection to mobile telephones, PDAs and the like which have USB ports but which do not require a voltage supply within the standard range of 4.4 to 5.25 Volts. In this example, the accessory device 12 is dedicated for use with such mobile telephones, PDAs etc, to the extent that it would not function properly if used with devices conforming to the full USB standard. The accessory device 12 may be for example a DVB-T (digital video broadcasting - terrestrial)receiver. Alternatively, it could be a GPS (global positioning system) module, an FM radio module, a camera module, a wireless LAN module, a Bluetooth (TM) module, or a receiver for any of the ISDB-T, ATSC and DAB systems, for example. It is a USB host device since it is intended for connection to mobile telephones and PDAs, which do not have host capabilities. The accessory device 12 includes a USB host module 19, connected to the other lines 15 of the USB bus 13, a 4 Volt power supply 20, which is connected to V_{BUS}, and a comparator 21. The comparator 21 includes a first input connected to V_{BUS}, a second input connected to a reference voltage V_{REF}, and an output IRQ, which is connected to an interrupt input of the USB host module 19. The power supply 20 may alternatively provide any suitable voltage, the range 3.6 to 4.2 volts being suitable for this example.

The USB host module 19 has a control output CTRL connected to a control input of the power supply 20, by which the USB host module can control whether the power supply provides a 4 Volt supply or presents a high impedance to V_{BUS}.

Operation may begin with the mobile telephone 11 connected to the accessory device 12 by the USB bus 13, with the PC 10 being unconnected. In this state, the accessory device 12 provides a voltage supply on V_{BUS}, which is used by the mobile telephone 11 after conversion to 3.3 Volts (for example) by the regulator 18. Here, the accessory device 12 acts as a host to the non-host mobile telephone 11, and communication between the two device occurs using the other lines 15 of the USB bus 13. In this state, IRQ is inactive, so the USB host module 19 is not interrupted, and CTRL is active, causing the voltage supply 20 to provide 4 Volts to V_{BUS}.

When subsequently the PC 10 is connected to the USB bus 13, the following occurs. As the PC 10 is connected, the voltage on V_{BUS} rises as a result of the voltage supply 16. When the voltage on V_{BUS} exceeds a threshold of 4.2 Volts, this is detected by the comparator 21, which sends IRQ active, to activate an interrupt. The USB host module 19 on detecting that IRQ has gone active takes a number of actions. Firstly, the USB host module 19 sends a reset command on the D⁺ and D⁻ lines 15, which causes resetting of the USB non-host module 17 of the mobile telephone 11. Secondly, the USB host module 19 causes the accessory device 12 to relinquish host status by going tri-state, that is by presenting a high impedance to each of the D⁺ and D lines 15. The impedance is typically several megaohms, but is at least one megaohm. Lastly, the USB host module 19 sends CTRL inactive, in response to which the voltage supply 20 is controlled to cease providing a supply voltage for V_{BUS} and to tri-state, i.e. present a high impedance to V_{BUS}. As a result, the PC 10 is able to assume host status with the mobile telephone 11 whilst the accessory device 12 waits in a standby mode.

When the PC 10 is subsequently disconnected, because it is physically removed from the bus 10 or its USB host module 14 is switched off for example, the following occurs. As the voltage on V_{BUS} falls (neither voltage supply 16, 20 is supplying V_{BUS}), the comparator 21 in the accessory device 12 detects this by detecting when the level falls below a threshold of 1.3 Volts (for example). On such a detection, the comparator 21 sends IRQ inactive, which wakes the USB host module 19, triggering it to reassume host status by sending CTRL active, causing the voltage supply 20 to supply V_{BUS} with 4 Volts, by removing the tri-state status of the D⁺ and D⁻ lines 15. The accessory device 12 may then communicate with the mobile telephone 11 in the same way as occurred prior to the PC 10 being connected to the USB bus 13. It may be desirable to arrange for a delay between detecting the low voltage condition and waking the USB host module 19.

A preferred form for the comparator 21 will now be described with reference to Figure 2. Referring to Figure 2, the comparator 21 is shown implemented using an LMV331, produced by National Semiconductor, which has an open-drain output. The values of resistors R1 to R6 are selected such that the rising voltage threshold is 4.2 Volts and the falling voltage threshold is 1.3 Volts. To obtain this, R1 to R5 can be IMΩ resistors, with feedback resistor R6 being a 422kΩ resistor. All resistors have a 1% tolerance. It will be appreciated that the falling voltage threshold is not so important as the rising voltage threshold, which is set taking into account the minimum voltage required for the regulator 18 to operate and the minimum voltage which could be supplied to V_{BUS} by the USB host PC 10. Although the example above uses 4.2 Volts as the rising level threshold, the threshold could be anywhere in the range 3.8 to 4.4 Volts. The lower value depends on the voltage supplied by the voltage supply 20.

Referring now to Figure 3, a mechanical arrangement for connection of the components of the Figure 1 system is shown. The mobile telephone 11 includes a USB port 30, to which is connected a first and 31 of a first short USB cable 32. The other end 33 of the first USB cable 32 is plugged into a first USB port 34 forming part of the accessory device 12. Similarly, the PC 10 includes a USB port 35, in which is plugged a first end 36 of a second, longer USB cable 37. The other end 38 of the second cable 37 is plugged into a second USB port 39 of the accessory device 12. In the accessory device 12, connections of the first USB port 34 are connected by respective wires directly to corresponding connections of the second USB port 39, allowing USB communication between the PC 10 and the mobile telephone 11 without involving the accessory device. In this example, the VBUS line is shown, and the other lines are grouped together as 40. The comparator 21, the voltage supply 20 and the USB host module 19 are connected to respective ones of VBUS and the other lines, as described above in relation to Figure 1. Accordingly, when the PC 10 is not hosting the USB bus 13, the accessory device 12 can detect this and assume host status. In this example, the USB ports 30, 34, 38 and 35 each include a female connector, and the cable ends 31, 33, 38 and 36 each include a male connector. To prevent current being fed along V_{BUS} towards the USB host 10, one of the cable end 38 and the second USB port 34 might include a suitably arranged diode (not shown) or other arrangement having a similar effect.

In an alternative arrangement (not shown), the first USB port 34 includes a male USB connector, which connects into the USB female connector 30 of the mobile telephone without the use of the first USB cable 32.

A cable-less arrangement is shown in Figure 4. Referring to Figure 4, a docking cradle 41 is provided at one end of the second USB cable, in place of the plug 38. The docking cradle includes a male USB plug 42, which mates with the second USB port 39 in the accessory device 12. The first USB port 34 of the accessory 12 includes a male connector, which plugs into a USB port 30 of the mobile telephone. No USB cables are required in this embodiment. A diode (not shown) or other device is connected to disallow flow of current along V_{BUS} towards the USB host. allowing connection of a USB host, such as a PC (not shown). Although not shown, the battery pack 51 includes the same circuitry as the accessory devices 12 described in the above embodiments. A diode (not shown) or other device is included in the USB female connector 57 or the USB male connector 59, to prevent current flowing towards the USB host. The battery pack 51 may include a DVB-T (digital video broadcasting - terrestrial) receiver (not shown) or the like, which communicates with the mobile telephone 51 using the USB bus 55, V_{BUS}.

## Claims

1. A device operable as a universal serial bus host device, the device including first and second universal serial bus ports (34, 39) connected directly to each other and to a universal serial bus host module (19) via a bus (15), in which the device includes means (21) for detecting the presence of a universal serial bus host externally connected to one of the first and second universal serial bus ports, and thus connected to the bus, and for relinquishing host status in response thereto.

2. A device as claimed in claim 1, including a power supply (20) for providing a supply voltage on a voltage supply line of the bus, the supplied voltage being less than a minimum allowed voltage for the voltage supply line of the bus.

3. A device as claimed in either preceding claim, in which the detecting means (21) includes means for detecting a change in voltage on the voltage supply line of the bus, thereby detecting the presence of the other host.

4. A device as claimed in claim 3, in which the change is an increase.

5. A device as claimed in claim 3 or claim 4, in which the detecting means includes a comparator.

6. A device as claimed in any of claims 1 to 5, in which the device is arranged for causing at least some lines of the universal serial bus host module (19) to be forced tri-state on detecting the presence of another universal serial bus host.

7. A device as claimed in any preceding claim, including means to send a reset command via the bus in response to detecting the presence of another universal serial bus host.

8. A device as claimed in any preceding claim, including means for detecting the loss of the other universal serial bus host, and for reassuming host status in response thereto.

9. A device as claimed in claim 8, in which the loss detecting means includes means for detecting a reduction in voltage on the voltage supply line of the bus, thereby detecting loss of the other universal serial bus host.

10. A device as claimed in any preceding claim in which the device is a battery pack.

11. A device as claimed in any preceding claim, in which the device includes a digital video broadcast receiver.

12. A system including a device as claimed in any preceding claim, and a universal serial bus host device (10) connected to a first one of the ports.

13. A system as claimed in claim 12, including a universal serial bus non-host device (11) connected to a second one of the ports.

14. A method of operating a device operable as a universal serial bus host, the device comprising first and second universal serial bus ports connected directly to each other and to a universal serial bus host module via a bus, the method comprising:
detecting a change in voltage on a voltage supply line forming part of the bus; and
relinquishing host status in response thereto.

## Patentansprüche

1. Gerät betreibbar als Hostgerät für einen universellen seriellen Bus, wobei das Gerät erste und zweite Anschlüsse (34, 39) für den universellen seriellen Bus enthält, die direkt miteinander und mit einem Hostmodul (19) des universellen seriellen Busses über einen Bus (15) verbunden sind, wobei das Gerät eine Einrichtung (21) enthält zum Erfassen des Vorhandenseins eines extern an einen der ersten und zweiten Anschlüsse des universellen seriellen Busses angeschlossenen und somit mit dem Bus verbundene Hosts des universellen seriellen Busses und zum Überlassen des Hoststatus im Ansprechen darauf.

2. Gerät nach Anspruch 1, mit einer Energieversorgung (20) zum Bereitstellen einer Versorgungsspannung auf einer Spannungsversorgungsleitung des Busses, wobei die zugeführte Spannung geringer ist als eine minimal zulässige Spannung für die Spannungsversorgungsleitung des Busses.

3. Gerät nach einem der vorhergehenden Ansprüche, wobei die Erfassungseinrichtung (21) eine Einrichtung enthält zum Erfassen einer Spannungsänderung auf der Spannungsversorgungsleitung des Busses, wodurch das Vorhandensein des anderen Host erfasst wird.

4. Gerät nach Anspruch 3, wobei die Änderung eine Erhöhung ist.

5. Gerät nach Anspruch 3 oder Anspruch 4, wobei die Erfassungseinrichtung einen Komparator enthält.

6. Gerät nach einem der Ansprüche 1 bis 5, wobei das Gerät ausgestattet ist zum Veranlassen von zumindest einigen Leitungen des Hostmoduls (19) des universellen seriellen Busses, einen erzwungenen Tri-State einzunehmen, beim Erfassen des Vorhandenseins eines anderen Hosts für den universellen seriellen Bus.

7. Gerät nach einem der vorhergehenden Ansprüche mit einer Einrichtung zum Senden eines Rücksetzbefehls über den Bus im Ansprechen auf ein Erfassen des Vorhandenseins eines anderen Hosts des universellen seriellen Busses.

8. Gerät nach einem der vorhergehenden Ansprüche, mit einer Einrichtung zum Erfassen des Verlusts des anderen Hosts des universellen seriellen Busses, und zum Wiedereinnehmen eines Hoststatus im Ansprechen darauf.

9. Gerät nach Anspruch 8, wobei die Verlusterfassungseinrichtung eine Einrichtung enthält zum Erfassen einer Spannungsverringerung auf der Spannungsversorgungsleitung des Busses, wodurch der Verlust des anderen Hosts des universellen seriellen Busses erfasst wird.

10. Gerät nach einem der vorhergehenden Ansprüche, wobei das Gerät eine Batteriepackung ist.

11. Gerät nach einem der vorhergehenden Ansprüche, wobei das Gerät einen digitalen Videorundsendungsempfänger enthält.

12. System mit einem Gerät nach einem der vorhergehenden Ansprüche, und einem an einen ersten der Anschlüsse angeschlossenen Hostgerät (10) des universellen seriellen Busses.

13. System nach Anspruch 12, mit einem an einen zweiten der Anschlüsse angeschlossenen Nicht-Host-Gerät (11) des universellen seriellen Busses.

14. Verfahren zum Betreiben eines als Wirt eines universellen seriellen Busses betreibbaren Geräts, wobei das Gerät erste und zweite Anschlüsse des universellen seriellen Busses umfasst, die direkt miteinander und mit einem Hostmodul des universellen seriellen Busses über einen Bus verbunden sind, wobei das Verfahren umfasst:
Erfassen einer Spannungsänderung auf einer Spannungsversorgungsleitung, die Teil des Busses bildet; und
Überlassen des Hoststatus im Ansprechen darauf.

## Revendications

1. Dispositif utilisable comme un dispositif hôte bus série universel, le dispositif comprenant des premier et second ports de bus série universels (34, 39) reliés directement l'un à l'autre et à un module hôte bus série universel (19) par l'intermédiaire d'un bus (15), dans lequel le dispositif comprend un moyen (21) permettant de détecter la présence d'un hôte bus série universel relié extérieurement à l'un des premier et second ports de bus série universels, et ainsi relié au bus, et d'abandonner le statut hôte en réponse à celle-ci.

2. Dispositif selon la revendication 1, comprenant une alimentation électrique (20) pour fournir une tension d'alimentation sur une ligne d'alimentation de tension du bus, la tension fournie étant inférieure à une tension autorisée minimale pour la ligne d'alimentation de tension du bus.

3. Dispositif selon l'une quelconque des revendications précédentes, dans lequel le moyen de détection (21) comprend un moyen permettant de détecter un changement de tension sur la ligne d'alimentation de tension du bus, pour ainsi détecter la présence de l'autre hôte.

4. Dispositif selon la revendication 3, dans lequel le changement est une augmentation.

5. Dispositif selon la revendication 3 ou la revendication 4, dans lequel le moyen de détection comprend un comparateur.

6. Dispositif selon l'une quelconque des revendications 1 à 5, dans lequel le dispositif est agencé de telle sorte qu'au moins certaines lignes du module hôte bus série universel (19) soient forcées dans trois états lors de la détection de la présence d'un autre hôte bus série universel.

7. Dispositif selon l'une quelconque des revendications précédentes, comprenant un moyen permettant d'envoyer une commande de réinitialisation par l'intermédiaire du bus en réponse à la détection de la présence d'un autre hôte bus série universel.

8. Dispositif selon l'une quelconque des revendications précédentes, comprenant un moyen permettant de détecter la perte de l'autre hôte bus série universel, et de reprendre le statut hôte en réponse à celle-ci.

9. Dispositif selon la revendication 8, dans lequel le moyen de détection de perte comprend un moyen permettant de détecter une réduction de la tension sur la ligne d'alimentation de tension du bus, pour détecter ainsi la perte de l'autre hôte bus série universel.

10. Dispositif selon l'une quelconque des revendications précédentes, dans lequel le dispositif est un bloc-piles.

11. Dispositif selon l'une quelconque des revendications précédentes, dans lequel le dispositif comprend un récepteur de diffusion vidéo numérique.

12. Système comprenant un dispositif selon l'une quelconque des revendications précédentes, et un dispositif hôte bus série universel (10) relié à un premier port.

13. Système selon la revendication 12, comprenant un dispositif non hôte bus série universel (11) relié à un second port.

14. Procédé d'utilisation d'un dispositif utilisable comme un hôte bus série universel, le dispositif comprenant des premier et second ports de bus série universels reliés directement l'un à l'autre et à un module hôte bus série universel par l'intermédiaire d'un bus, ledit procédé comprenant :
la détection d'un changement de tension sur une ligne d'alimentation de tension faisant partie du bus ; et
l'abandon du statut hôte en réponse à celle-ci.
